(19) Europäisches Patentamt
European Patent Office
Office européen des brevets

(11) EP 3 255 079 B1

(12) **EUROPÄISCHE PATENTSCHRIFT**

(45) Veröffentlichungstag und Bekanntmachung des Hinweises auf die Patenterteilung:
**15.08.2018 Patentblatt 2018/33**

(51) Int Cl.:
***C08G 59/50*** (2006.01) ***C08G 59/24*** (2006.01)
***C08G 59/56*** (2006.01)

(21) Anmeldenummer: **16173858.8**

(22) Anmeldetag: **10.06.2016**

(54) **EPOXIDHARZ-ZUSAMMENSETZUNG ENTHALTEND 2-(3,3,5-TRIMETHYLCYCLOHEXYL)PROPAN-1,3-DIAMIN ALS HÄRTER**

EPOXY RESIN COMPOSITION CONTAINING 2- (3,3,5-TRIMETHYLCYCLOHEXYL) PROPANE-1,3-DIAMINE AS CURING AGENTS

COMPOSITION EPOXYDE CONTENANT 2-(3, 3, 5-TRIMETHYLCYCLOHEXYL) PROPANE -1, 3 DIAMINE EN TANT QUE DURCISSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**13.12.2017 Patentblatt 2017/50**

(73) Patentinhaber: **Evonik Degussa GmbH**
**45128 Essen (DE)**

(72) Erfinder:
- **LANGKABEL, Eike**
**41844 Wegberg (DE)**
- **ORTELT, Martina**
**74223 Flein (DE)**
- **FUCHSMANN, Dirk**
**45721 Haltern am See (DE)**
- **BALTHASAR, Jaclyn**
**21509 Glinde (DE)**
- **RÜFER, Alexander Martin**
**45657 Recklinghausen (DE)**
- **RITTSTEIGER, Anne**
**59399 Olfen (DE)**

(56) Entgegenhaltungen:
**DE-A1-102004 024 439** **DE-A1-102012 223 387**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 255 079 B1

## Beschreibung

Gegenstand der Erfindung ist eine Epoxidharz-Zusammensetzung enthaltend 2-(3,3,5-trimethylcyclohexyl)propan-1,3-diamin als Härter.

Epoxid-Zusammensetzungen bestehend aus mindestens einem Epoxidharz und mindestens einem Härter, z.B. Amine, Anhydride oder Dicyandiamid, sind seit langem bekannt und werden in Anwendungsfeldern wie z.B. Coatings, Composites oder Flooring eingesetzt.

Gegenstand der Erfindung sind Epoxid-Zusammensetzungen bestehend aus mindestens einer Harzkomponente und mindestens einer Härterkomponente, wobei die Zusammensetzung geeignet ist als duroplastische Matrix, z.B. zur Herstellung von Faser-Matrix-Halbzeugen und ausgehärteten Faser-Matrix-Formteilen oder -Laminaten, sogenannten Composites.

Im Rahmen steigender Anforderungen an eine effiziente Nutzung knapper Ressourcen rücken Leichtbaulösungen verstärkt in den Blickpunkt verschiedenster Industrien. Überall dort, wo Massen bewegt werden müssen, sind Faserverbundwerkstoffe / Composites eine interessante Option, da diese hohe spezifische Steifigkeiten und Festigkeiten bei geringem Gewicht bieten. Composites sind aus diesem Grund in der Luftfahrt seit Jahrzehnten etabliert und ohne Faserverbundwerkstoff-Technologien wären z.B. auch Rotorblätter für Windenergieanlagen nicht denkbar. Aufgrund ihres hervorragenden Eigenschaftsprofils rücken diese Werkstoffe auch verstärkt in den Fokus beim Automobilbau. In allen 3 genannten Marktsegmenten werden mechanisch hochfeste Komponenten gefordert, wie Sie durch endlosfaserverstärkte Polymerwerkstoffe erzielt werden können. Die Geometrien dieser Komponenten werden jedoch immer anspruchsvoller (z.B. nimmt die Länge der Rotorblätter von Windenergieanlagen stetig zu, um möglichst viel Windenergie "ernten" zu können), bei gleichzeitiger Forderung nach immer höherer Produktivität (z.B. kurze Zykluszeiten insbesondere in der Automobilfertigung). Beispielsweise in der DE 10 2012 223 387 A1 werden Epoxidharz-Zusammensetzungen offenbart, bei denen Isophorondiamin als Härter zum Einsatz kommt und die für die Verwendung in Composites vorgeschlagen werden.

Die erfindungsgemäße Epoxidharzzusammensetzung ist im Bereich der Composites insbesondere für Flüssig-Imprägnierverfahren geeignet. Ein solches Flüssig-Imprägnierverfahren ist z.B. das RTM-Verfahren. Dieses Verfahren ist dadurch gekennzeichnet, dass aus textilen Flächengebilden zunächst sog. endkonturnahe Preforms hergestellt werden. Dabei werden nicht mit Harz imprägnierte Faserprodukte (also Gewebe, Gelege, Vliese, etc. im Anlieferungszustand) zu dreidimensionalen Gebilden endkonturnah vorgeformt und die einzelnen Lagen dabei zur Fixierung verklebt, oder bei besonders komplexen Teilen, vernäht. Diese reine Faserpreform wird dann in eine Kavität gebracht und in der geschlossenen Kavität, z.B. einem beheizten Stahlwerkzeug, mit einer lösemittelfreien Flüssigharzformulierung imprägniert und in der geschlossenen Kavität sofort bis zum Endzustand durchgehärtet (einstufiges Verfahren). Weitere Verfahren zur Herstellung von Faserverbundwerkstoffen, die von flüssigen, lösemittelfreien Imprägniermischungen ausgehen, sind die Pultrusion (Strangziehverfahren) zur Herstellung von Profilen jeglicher Art und das Fadenwickelverfahren (Filament Winding) zur Herstellung von Rohren oder Druckbehältern, z.B. Gastanks.
Unter Composites werden in diesem Zusammenhang Verbundwerkstoffe aus Fasern und Kunststoffmatrix verstanden.

Der Begriff Composites wird im Rahmen dieser Erfindung insbesondere synonym zu den Begriffen Verbundstoff, Verbund-Bauteile, Verbundwerkstoff, Faserverbundwerkstoff, Verbund-Formteile, faserverstärkte Kunststoffe oder faserverstärkte Bauteile, CFK, GFK und FVK verwendet. Prepregs und SMC (Sheet Moulding Compound) stehen für typische Faser-Matrix-Halbzeuge zur Herstellung von Composites.

Weiterhin können die härtbaren Zusammensetzungen für Beschichtungen, insbesondere Beschichtungen auf Metall, mineralischen Untergründen und Kunststoffen, sowie für Fußbodenbeschichtungen, für Polymerbeton, Reparatursysteme und Ankermassen, sowie außerdem für Klebstoffe, Vergussmassen, Domings und Lacke, insbesondere im Korrosionsschutz, eingesetzt werden.

Wie ersichtlich, sind die Einsatzgebiete für Epoxidharzformulierungen und damit die Anforderungen an diese Formulierungen ausgesprochen vielfältig.
Daher war es die Aufgabe der vorliegenden Erfindung, neue Epoxidharz-Zusammensetzungen auf der Basis neuer Härter zu finden, die höchst flexibel formuliert werden können, um möglichst vielen Anforderungen Rechnung zu tragen. Zu diesen Anforderungen gehören eine hohe Reaktivität, ein in weiten Grenzen anpassbares rheologisches Verhalten, eine hohe Glasübergangstemperatur, gute mechanische Eigenschaften, gute Medienbeständigkeit, geringer Schrumpf sowie eine geringe Vergilbungsneigung.

Gegenstand der Erfindung ist eine Epoxidharz-Zusammensetzung enthaltend:

A) mindestens eine Epoxidverbindung
und

B) eine Härterzusammensetzung enthaltend:

B1) 0,1 - 100 Gew.-% 2-(3,3,5-trimethylcyclohexyl)propan-1,3-diamin
und
B2) 99,9 - 0 Gew.-% mindestens einem weiteren Diamin und/oder Polyamin,

wobei das stöchiometrische Verhältnis der Epoxid-Gruppen von A) und der Anzahl der aktiven Wasserstoffatome der funktionellen Gruppen von B) von 1 zu 2 bis 2 zu 1 variiert, bevorzugt von 1 zu 1,5 bis 1,5 zu 1 und besonders bevorzugt von 1 zu 1,25 bis 1,25 zu 1,

C) optional 0,1 bis 10 Gew.-% mindestens eines Härtungsbeschleunigers,

D) optional mindestens einen latenten Härter,
wobei sich die Mengen von A)-D) zu 100 Gew.-% addieren,

E) gegebenenfalls weitere Zusatzstoffe.

Bevorzugt ist Gegenstand der Erfindung eine Epoxidharz-Zusammensetzung bestehend aus:

A) mindestens eine Epoxidverbindung
und

B) eine Härterzusammensetzung enthaltend:

B1) 0,1 - 100 Gew.-% 2-(3,3,5-trimethylcyclohexyl)propan-1,3-diamin
und
B2) 99,9 - 0 Gew.-% mindestens einem weiteren Diamin und/oder Polyamin,

wobei das stöchiometrische Verhältnis der Epoxid-Gruppen von A) und der Anzahl der Wasserstoffatome der funktionellen Gruppen von B) von 1 zu 2 bis 2 zu 1 variiert, bevorzugt von 1 zu 1,5 bis 1,5 zu 1 und besonders bevorzugt von 1 zu 1,25 bis 1,25 zu 1,

C) optional 0,1 bis 10 Gew.-% mindestens eines Härtungsbeschleunigers,

D) optional mindestens einen latenten Härter,
wobei sich die Mengen von A)-D) zu 100 Gew.-% addieren,

E) gegebenenfalls weitere Zusatzstoffe.

Harze

**Komponente A)**

Als Komponente A) sind Epoxidverbindungen geeignet. Geeignete Epoxidverbindungen werden z. B. in EP 675 185 beschrieben.
Es kommt eine Vielzahl der hierfür bekannten Verbindungen in Betracht, die mehr als eine Epoxidgruppe, vorzugsweise zwei Epoxidgruppen, pro Molekül enthalten. Diese Epoxidverbindungen können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppierungen und ähnliche. Vorzugsweise handelt es sich dabei um Glycidylether, die sich von mehrwertigen Phenolen, insbesondere Bisphenolen sowie Novolaken ableiten und deren Molmassen bezogen auf die Anzahl der Epoxidgruppen ME ("Epoxidäquivalentgewichte", "EV-Wert") zwischen 100 und 1500, insbesondere jedoch zwischen 150 und 250 g/val, liegen.
Als mehrwertige Phenole sind beispielsweise zu nennen: Resorcin, Hydrochinon, 2,2-Bis-(4-hydroxyphenyl)-propan (Bisphenol A), Isomerengemische des Dihydroxydiphenylmethans (Bisphenol F), 4,4'-Dihydroxydiphenylcyclohexan, 4,4'-Dihydroxy-3,3'-dimethyldiphenylpropan,4,4'-Dihydroxydiphenyl,4,4'-Dihydroxybenzophenon, Bis-(4-hydroxyphenyl)-1,1-äthan, Bis-(4-hydroxyphenyl)-1,1-isobutan, 2,2-Bis-(4-hydroxy-tert.butylphenyl)-propan, Bis-(2-hydroxynaphthyl)-methan, 1,5-Dihydroxynaphthalin, Tris-(4-hydroxyphenyl)-methan, Bis-(4-hydroxyphenyl)-ether, Bis-(4-hydroxyphenyl)-sulfon u. a. sowie die Chlorierungs- und Bromierungsprodukte der vorstehend genannten Verbindungen wie beispielsweise Tetrabrom-Bisphenol A. Ganz besonders bevorzugt, werden flüssige Diglycidylether auf Basis von Bisphenol A und Bisphenol F mit einem Epoxidäquivalentgewicht von 150 bis 200 g/val eingesetzt.
Es können auch Polyglycidylether von Polyalkoholen verwendet werden, wie z. B. Ethandiol-1,2-diglycidylether, Propandiol-1,2-diglycidylether, Propandiol-1,3-diglycidylether, Butandioldiglycidylether, Pentandioldiglycidylether (auch Neopentylglykoldiglycidylether), Hexandioldiglycidylether, Diäthylenglykoldiglycidylether, Dipropylenglykoldiglycidylether, höhere Polyoxyalkylenglykoldiglycidylether, wie z. B. höhere Polyoxyäthylenglykoldiglycidylether und Polyoxypropylenglykoldiglycidylether, Mischpolyoxyäthylen-propylenglykoldiglycidylether, Polyoxytetramethylenglykoldiglycidylether, Polyglycidylether des Glycerins, des 1,2,6-Hexantriols, Trimethylolpropans, Trimethyloläthans, Pentaerythrits, Sorbitols, Polyglycidylether von oxalkylierten Polyolen (wie z. B. des Glycerins, Trimethylolpropans, Pentaerythrits u. a.), Diglydicylether des Cyclohexandimethanols, Bis-(4-hydroxycyclohexyl)methans und 2,2-Bis-(4-hydroxycyclohexyl)propans, Polyglycidylether des Rizinusöls, Triglycidyltris-(2-hydroxy-äthyl)-isocyanurat.

Weiterhin kommen als Komponente A) in Frage: Poly-(N-glycidyl) Verbindungen, die erhältlich sind durch Dehydrohalogenierung der Reaktionsprodukte von Epichlorhydrin und Aminen wie Anilin, n-Butylamin, Bis-(4-aminophenyl)methan, m-Xylylendiamin oder Bis-(4-methylaminophenyl)methan. Zu den Poly-(N-glycidyl)-Verbindungen zählen aber auch Triglycidylisocyanurat, Triglycidylurazol sowie deren Oligomere, N,N'-Diglycidylderivate von Cycloalkylenharnstoffen und Diglycidylderivate von Hydantoinen u. a.
Weiterhin können auch Polyglycidylester von Polycarbonsäuren eingesetzt werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Tetrahydrophthalsäure, Hexahydrophthalsäure, 2,6-Naphthalindicarbonsäure und höhere Dicarbonsäurediglycidylester, wie z. B. dimerisierte bzw. trimerisierte Linolensäure, erhält. Beispiele sind Adipinsäurediglycidylester, Phthalsäurediglycidylester und Hexahydrophthalsäurediglycidylester.
Weiterhin seien genannt Glycidylester ungesättigter Carbonsäuren und epoxidierte Ester von ungesättigten Alkoholen bzw. ungesättigten Carbonsäuren. Zusätzlich zu den Polyglycidylethern können geringe Mengen von Monoepoxiden wie z. B. Methylglycidylether, Butylglycidylether, Allylglycidylether, Äthylhexylglycidylether, langkettige aliphatische Glycidylether, wie z. B. Cetylglycidylether und Stearylglycidylether, Monoglycidylether eines höheren isomeren Alkoholgemisches, Glycidylether einer Mischung von C12 bis C13 Alkoholen, Phenylglycidylether, Kresylglycidylether, p-t-Butylphenylglycidylethers, p-Octylphenylglycidylether, p-Phenylphenylglycidylether, Glycidylether eines oxalkylierten Laurylalkohols sowie Monoepoxide wie beispielsweise epoxidierte einfach ungesättigte Kohlenwasserstoffe (Butylen-, Cyclohexen-, Styroloxid) in Massenanteilen bis zu 30 Gew.-%, vorzugsweise 10 bis 20 Gew.-%, bezogen auf die Masse der Polyglycidylether mitverwendet werden
Eine ausführliche Aufzählung der geeigneten Epoxyverbindungen findet sich in dem Handbuch "Epoxidverbindungen und Epoxidharze" von A. M. Paquin, Springer Verlag, Berlin 1958, Kapitel IV, und in Lee Neville "Handbook of Epoxy Resins", 1967, Chapter 2.
Als Epoxyverbindungen kommen dabei bevorzugt Glycidylether und Glycidylester, aliphatische Epoxide, Diglycidylether auf Basis Bisphenol A und / oder Bisphenol F und Glycidylmethacrylate in Frage. Beispiele für solche Epoxide sind auch Triglycidylisocyanurat (TGIC, Handelsname ARALDIT 810, Huntsman), Gemische aus Terephthalsäurediglycidylester und Trimelitsäuretriglycidylester (Handelsname ARALDIT PT 910 und 912, Huntsman), Glycidylester der Versaticsäure (Handelsname CARDURA E10, Shell), 3,4-Epoxycyclohexylmethyl-3',4'-epoxycyclohexancarboxylat (ECC), Ethylhexylglycidylether, Butylglycidylether, Pentaerythrittetraglycidylether, (Handelsname POLYPOX R 16, UPPC AG) sowie andere Polypoxtypen mit freien Epoxygruppen.
Es können auch Mischungen der genannten Epoxyverbindungen eingesetzt werden.
Als Epoxykomponente werden besonders bevorzugt_Polyepoxide auf Basis von Bisphenol A-diglycidylether, Bisphenol F-diglycidylether, 4,4'-Methylen-bis[N,N-bis(2,3-epoxypropyl)anilin], Hexandioldiglycidylether, Butandioldiglycidylether, Trimethylolpropantriglycidylether, 1,2,3-Propantrioltriglycidylether, Pentaerythrit-tetraglycidylether und Hexahydrophthalsäurediglycidylester.

Erfindungsgemäß können bevorzugt auch Mischungen dieser Epoxyverbindungen als Komponente A) eingesetzt werden.

Die Menge der Komponente A) richtet sich nach der Zusammensetzung der Komponente B) und wird so berechnet, dass das stöchiometrische Verhältnis der Epoxid-Gruppen von A) und der Anzahl der Wasserstoffatome der funktionellen Gruppen von B) von 1 zu 2 bis 2 zu 1 variiert, bevorzugt von 1 zu 1,5 bis 1,5 zu 1 und besonders bevorzugt von 1 zu 1,25 bis 1,25 zu 1.

Das bedeutet, dass pro Wasserstoffatom der Aminogruppen aus B) eine Epoxidgruppe aus A) zur Reaktion kommt.

Als Komponente B1) wird erfindungsgemäß 2-(3,3,5-trimethylcyclohexyl)propan-1,3-diamin (CPDA)eingesetzt.

2-(3,3,5-trimethylcyclohexyl)propan-1,3-diamin (CPDA) hat die chemische Struktur wie in Formel 1 dargestellt.

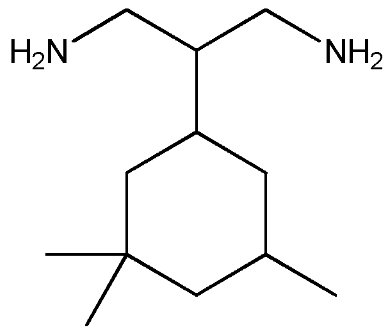

Formel 1: 2-(3,3,5-trimethylcyclohexyl)propan-1,3-diamin (CPDA)

Als Verbindungen B2) sind prinzipiell solche Diamine und Polyamine geeignet, die mindestens 2 Aminogruppen enthalten. Diamine und Polyamine können auch in Mischungen mit latenten Aminen, Aminoalkoholen oder Polymercaptanen eingesetzt werden.

Di- oder Polyamine B2) sind in der Literatur bekannt. Diese können monomere, oligomere und/oder polymere Verbindungen sein. Monomere und oligomere Verbindungen sind bevorzugt ausgewählt aus der Gruppe Diamine, Triamine, Tetramine. Die Amingruppe der Di- oder Polyamine B2) kann an einem primären, sekundären oder tertiären Kohlenstoffatom angebunden sein, bevorzugt an einem primären oder sekundären Kohlenstoffatom. Es können auch Mischungen von Di- und/oder Polyamine als Komponente B2) eingesetzt werden.

Als Komponente B2) können die folgenden Amine allein oder in Mischungen eingesetzt werden:

- aliphatische Amine, wie die Polyalkylenpolyamine, bevorzugt ausgewählt aus 1,2-Ethylendiamin, 1,2-Propylendiamin, 1,3-Propylendiamin, 1,2-Butylendiamin, 1,3-Butylendiamin, 1,4-Butylendiamin, 2-(Ethylamino)ethylamin, 3-(Methylamino)propylamin Diethylentriamin,Triethylentetramin, Pentaethylenhexamin, Trimethylhexamethylendiamin, 2,2,4- Trimethylhexamethylendiamin, 2,4,4-Trimethylhexamethylendiamin, 2-Methyl-pentandiamin, Hexamethylendiamin, N-(2-Aminoethyl)-1,2-ethandiamin, N-(3-Aminopropyl)-1,3-propandiamin, N,N"-1,2-Ethandiylbis-(1,3-propandiamin), Dipropylentriamin Adipinsäuredihydrazid, Hydrazin;
- Oxyalkylenpolyamine, ausgewählt aus Polyoxypropylendiamin und Polyoxypropylentriamin (z. B., Jeffamine® D-230, Jeffamine® D-400, Jeffamine® T-403, Jeffamine® T-5000), 1,13-Diamino-4,7,10-trioxatridecan, 4,7-Dioxadecan-1,10-diamin;
- cycloaliphatische Amine, ausgewählt aus Isophorondiamin (3,5,5-Trimethyl-3-aminomethyl-cyclohexylamin), 4,4'-Diaminodicyclohexylmethan, 2,4'-Diaminodicyclohexylmethan und 2,2'-Diaminodicyclohexylmethan allein oder in Mischungen der Isomeren, 3,3'-Dimethyl-4,4'-diamino-dicyclohexylmethan, N-Cyclohexyl-1,3-propandiamin, 1,2-Diaminocyclohexan, 3-(Cyclohexylamino)propylamin, Piperazin, N-Aminoethylpiperazin, TCD-Diamin (3(4), 8(9)-Bis(aminomethyl)-tricyclo[5.2.1.$0^{2,6}$]decan), 4-Methylcyclohexan-1,3-diamin
- araliphatische Amine, wie Xylylendiamine;
- aromatische Amine, ausgewählt aus Phenylendiamine, 1,3-Phenylendiamin,. 1,4-Phenylendiamin,4,4'-Diaminodiphenylmethan, 2,4'-Diaminodiphenylmethan 2,2'-Diaminodiphenylmethan allein oder in Mischungen der Isomeren;
- Addukthärter, welches die Umsetzungsprodukte von Epoxidverbindungen, insbesondere Glycidylether des Bisphenol A und F, mit überschüssigem Amin sind;
- Polyamidoaminhärter, die durch Kondensation von Mono- und Polycarbonsäuren mit Polyaminen erhalten werden, insbesondere durch Kondensation von Dimerfettsäuren mit Polyalkylenpolyaminen;
- Mannichbasenhärter, die durch Umsetzung von ein- oder mehrwertigen Phenolen mit Aldehyden, insbesondere Formaldehyd, und Polyaminen erhalten werden;
- Mannichbasen z. B. auf Basis von Phenol und/oder Resorcin, Formaldehyd und m-Xylylendiamin sowie N-Aminoethylpiperazin und Abmischungen von N-Aminoethylpiperazin mit Nonylphenol und/oder Benzylalkohol, Phenalkamine, die in einer

Mannichreaktion aus Cardanolen, Aldehyden und Aminen gewonnen werden. Es können auch Mischungen der vorab genannten Di- oder Polyamine als Komponente B2) eingesetzt werden.

Bevorzugt werden Diamine als Komponente B2) ausgewählt aus Isophorondiamin (3,5,5-Trimethyl-3-aminomethyl-cyclohexylamin, IPD), 4,4'-Diaminodicyclohexylmethan, 2,4'-Diaminodicyclohexylmethan, 2,2'-Diaminodicyclohexylmethan (auch als PACM bezeichnet), allein oder in Mischungen der Isomeren, eine Mischung der Isomeren aus 2,2,4-Trimethylhexamethylendiamin und 2,4,4-Trimethylhexamethylendiamin (TMD), Addukthärter auf Basis der Umsetzungsprodukte von Epoxidverbindungen und den vorgenannten Aminen B2) oder Kombination von vorgenannten

Aminen B2), eingesetzt. Es können auch Mischungen dieser Verbindungen eingesetzt werden.

Weiterhin können als Komponente B2) bevorzugt die folgenden Amine auf Basis von Triacetondiamin eingesetzt werden: 2,2,6,6-Tetramethyl-4-amino-piperidin (TAD), Hexamethylen-Bis-(4-Amino-2,2,6,6-tetramethylpiperidin), N-Butyl-4-Amino-2,2,6,6-tetramethylpiperidin, N,N-Dimethylaminopropyl-4-Amino-2,2,6,6-tetramethylpiperidin, N-Propyl-4-Amino-2,2,6,6-tetramethylpiperidin, N-Isopropyl-4-Amino-2,2,6,6-tetramethylpiperidin, N-Hydroxyethyl-4-Amino-2,2,6,6-tetramethylpiperidin, N-Methoxyethyl-4-Amino-2,2,6,6-tetramethylpiperidin, N-Methoxyethyl-4-Amino-2,2,6,6-tetramethylpiperidin, N',N'-Dimethylaminoethyl-4-Amino-2,2,6,6-tetramethylpiperidin, N-Morpholinoethyl-4-Amino-2,2,6,6-tetramethylpiperidin, N-Piperazinoethyl-4-Amino-2,2,6,6-tetramethylpiperidin, 4-Morpholino-2,2,6,6-tetramethylpiperidin.

Es können auch Mischungen der vorab genannten Amine auf Basis von Triacetondiamin eingesetzt werden.

Bevorzugt werden 2,2,6,6-Tetramethyl-4-amino-piperidin (TAD) und/oder Hexamethylen-Bis-(4-Amino-2,2,6,6-tetramethylpiperidin) eingesetzt.

Ganz besonders bevorzugt wird als Komponente B2)

a) Isophorondiamin (3,5,5-Trimethyl-3-aminomethyl-cyclohexylamin, IPD),

b) oder eine Kombination aus

1. Isophorondiamin und
2. einer Mischung der Isomeren aus 2,2,4-Trimethylhexamethylendiamin und 2,4,4-Trimethylhexamethylendiamin (TMD), allein oder in Mischungen der Isomeren
3. und/oder einer Mischung der Isomeren aus 4,4'-Diaminodicyclohexylmethan, 2,4'-Diaminodicyclohexylmethan und 2,2'-Diaminodicyclohexylmethan (auch als PACM bezeichnet), allein oder in Mischungen der Isomeren,

c) oder eine Kombination aus

1. einer Mischung der Isomeren aus 2,2,4-Trimethylhexamethylendiamin und 2,4,4-Trimethylhexamethylendiamin (TMD), allein oder in Mischungen der Isomeren
2. und/oder einer Mischung der Isomeren aus 4,4'-Diaminodicyclohexylmethan, 2,4'-Diaminodicyclohexylmethan und 2,2'-Diaminodicyclohexylmethan (auch als PACM bezeichnet), allein oder in Mischungen der Isomeren,

d) und/oder Addukthärter auf Basis der Umsetzungsprodukte von Epoxidverbindungen und den vorgenannten Aminen B2) oder Kombination von vorgenannten Aminen B2)

eingesetzt.

Erfindungsgemäß können Aminoalkohole als weitere Komponente zu den Diaminen und Polyaminen in Mischungen in der Komponente B2) eingesetzt werden. Als Aminoalkohole seien beispielhaft Monoethanolamin, 3-Amino-1-propanol, Isopropanolamin, Aminoethoxyethanol, N-(2-Aminoethyl)ethanolamin, N-Ethylethanolamin, N-Butylethanolamin, Diethanolamin, 3-(Hydroxyethylamino)-1-propanol Isophoronaminoalkohol und Diisopropanolamin genannt. Aminoalkohole können allein oder als Mischungen mehrerer Aminoalkohole zusammen mit Di- und Polyaminen als Komponente B2) eingesetzt werden.

Die eingesetzte Menge der Komponente B1) beträgt allgemein 0,1 - 100 Gew.-%, bevorzugt 20-80% bezogen auf die Gesamtmenge aus B1) und B2).

**Komponente C) Härtungsbeschleuniger**

Weiterhin sind Härtungsbeschleuniger als Komponente C) enthalten und werden als Katalysatoren für die Epoxy-Amin-Reaktion zugegeben. Geeignete Beschleuniger sind beschrieben in: H. Lee and K. Neville, Handbook of Epoxy Resins, McGraw-Hill, New York, 1967. Erfindungsgemäß werden 0,1 bis 10 Gew.-%, bevorzugt 0,1 bis 5 Gew.-%, besonders bevorzugt 0,5 bis 2,0 Gew.-%, bezogen auf die Gesamtmenge der Komponenten, mindestens eines Härtungsbeschleunigers eingesetzt.

Beispiele für geeignete Beschleuniger sind organische Säuren wie Salicylsäure, Dihydroxybenzoesäure, Trihydroxybenzoesäure, Methylsalicylsäure, 2-Hydroxy-3-isopropyl-benzoesäure oder Hydroxynaphthoesäuren, Milchsäure und Glycolsäure, tertiäre Amine wie Benzyldimethylamin (BDMA), 1,4-Diazabicyclo[2,2,2]octan (DABCO), Triethylamin, N,N'-Dimethylpiperazin oder Aminoethylpiperazin (AEP), Hydroxylamine wie Dimethylaminomethylphenol, Bis(dimethylaminomethyl)phenol, 2,4,6-Tris(dimethylaminomethyl)phenol (Ancamine K54), Urone wie 3-(4-Chlorphenyl)-1,1-dimethylharnstoff (Monuron), 3-(3,4-Dichlorphenyl)-1,1-dimethyl-harnstoff (Diuron), 3-Phenyl-1,1-dimethylharnstoff (Fenuron), 3-(3-Chlor-4-methylphenyl)-1,1-dimethyl-harnstoff (Chlortoluron), Tetraalkylguanidine wie N,N,N',N'-Tetramethylguanidin (TMG), Imidazol und -derivate wie 1H-Imidazol, 1-Methylimidazol, 2-Methylimidazol, 1-Benzyl-2-methylimidazol, 2-Ethyl-4-ethylimidazol, 2-Phenylimidazol, 2-Phenyl-4-methylimidazol, 1-Vinylimidazol, 1-(2-Hydroxyethyl)imidazol, 1,2-Dimethylimidazol, 1-Cyanoethylimidazol und deren geeignete Salze, Phenol und -derivate wie t-Butylphenol, Nonylphenol, Bisphenol-A oder Bisphenol-F sowie organische oder anorganische Salze und Komplexverbindungen wie Methyltriphenylphosphoniumbromid, Calciumnitrat (Accelerator 3130), oder Mg-, Ca-, Zn- und Sn-Carboxylate, -sulfonate, -phosphonate, -sulfate, - tetrafluoroborate, oder-nitrate. Besonders bevorzugt sind Imidazol und Imidazol-Derivate.

**Komponente D)**

Zusätzlich zur Komponente B2) können latente Härter als Komponente D) eingesetzt werden. Als zusätzlicher latenter Härter kann im Prinzip jede für diesen Zweck bekannte Verbindung eingesetzt werden, d.h. jede Verbindung, welchen Epoxidharzen gegenüber unterhalb der definierten Grenztemperatur von 80 °C inert ist, die aber schnell unter Vernetzung des Harzes reagiert, sobald diese Grenztemperatur überschritten ist. Die Grenztemperatur der verwendeten latenten Härter ist vorzugsweise mindestens 85 °C, insbesondere mindestens 100 °C. Solche Verbindungen sind wohlbekannt und auch im Handel erhältlich. Prinzipiell können latente Härter, ausgewählt aus Dicyandiamid, Cyanoguanidine, aromatische Amine, Guanidinen, modifizierten Polyaminen, N-Acylimidazolen, Imidazolen, Carbonsäurehydrazide, Triazinderivate, Melamin und dessen Derivate, N-Cyanacylamid-Verbindungen, Acylthiopropylphenole, eingesetzt werden.

Beispiele geeigneter latenter Härter sind Dicyandiamid, Cyanoguanidine, wie z. B. die in den US 4,859,761 oder EP-A- 306 451 beschriebenen Verbindungen, aromatische Amine, wie z.B. 4,4'- oder 3,3'-Diaminodiphenylsulfon, oder Guanidine, wie z. B. 1-o-Tolylbiguanid, oder modifizierte Polyamine, wie z. B. Ancamine TM 2014 S (Anchor Chemical UK Limited, Manchester). Geeignete latente Härter sind auch N-Acylimidazole, wie z.B. 1-(2,4,6-Trimethylbenzoyl)-2-phenylimidazol oder 1-Benzoyl-2-isopropylimidazol. Solche Verbindungen sind beispielsweise in den US 4,436,892, US 4,587,311 oder der JP-PS 743,212 beschrieben.
Weitere geeignete Härter sind Metallsalzkomplexe von Imidazolen, wie z. B. in der US 3,678,007 oder US 3,677,978 beschrieben, Carbonsäurehydrazide, wie z. B. Adipinsäuredihydrazid, Isophthalsäuredihydrazid oder Anthranilsäurehydrazid, Triazinderivate, wie z. B. 2-Phenyl-4,6-diamino-s-triazin (Benzoguanamin) oder 2-Lauryl-4,6-diamino-s-triazin (Lauroguanamin) sowie Melamin und dessen Derivate. Die letztgenannten Verbindungen sind z. B. in der US 3,030,247 beschrieben.
Als latente Härter geeignet sind auch Cyanacetylverbindungen, wie z. B. in der US 4,283,520 beschrieben, beispielsweise Neopentylglykolbiscyanessigester, Cyanessigsäure-N-isobutylamid, 1,6-Hexamethylen-bis-cyanacetat oder 1,4-Cyclohexandimethanol-bis-cyanacetat.
Geeignete latente Härter sind auch N-Cyanacylamid-Verbindungen wie z. B. N,N'-Dicyanadipinsäurediamid. Solche Verbindungen sind z. B. in den US 4,529,821, US 4,550,203 und US 4,618,712 beschrieben.
Weitere geeignete latente Härter sind die in der US 4,694,096 beschriebenen Acylthiopropylphenole und die in der US 3,386,955 offenbarten Harnstoffderivate wie beispielsweise Toluol-2,4-bis(N,N-dimethylcarbamid).
Bevorzugte latente Härter sind 4,4' -Diaminodiphenylsulfon und Dicyandiamid.

Die Komponente D) kann in Mengen von 1-30 Gew.-%, bevorzugt 3-25 Gew.-% und besonders bevorzugt in Mengen von 5-20 Gew.-%, bezogen auf die Summe der Komponenten B1), B2) und D), eingesetzt werden.
Falls ein latenter Härter zusätzlich zu Komponente B2) eingesetzt wird, wird Komponente A) in solchen Mengen gewählt, dass das Verhältnis der Epoxid-Gruppen von A) und der Anzahl der Wasserstoffatome der funktionellen Gruppen von B) und D) von 1 zu 2 bis 2 zu 1 variiert, bevorzugt von 1 zu 1,5 bis 1,5 zu 1 und besonders bevorzugt von 1 zu 1,25 bis 1,25 zu 1.

**Komponente E) Zusatzstoffe**

Die erfindungsgemäße Zusammensetzung kann gegebenenfalls Zusatzstoffe enthalten. Unter Zusatzstoffen werden Stoffe verstanden, die in der Regel zugesetzt werden, um die Eigenschaften der Epoxidzusammensetzung in gewünschter Richtung zu verändern, z. B. Viskosität, Benetzungsverhalten, Stabilität, Reaktionsgeschwindigkeit, Blasenbildung, Lagerfähigkeit oder Haftung, und auch Gebrauchseigenschaften dem Anwendungszweck anzupassen. Geeignete Zusatzstoffe werden z.B. in WO 99/55772, S. 15-25, und in "Plastics Additives; R. Gächter und H. Müller, Hanser Publishers 1983" beschrieben. Diese können der Komponente A) oder B) zugegeben werden.
So können beispielsweise Lichtschutzmittel wie z. B. sterisch gehinderte Amine, oder andere Hilfsmittel, wie sie z. B. in EP 669 353 beschrieben wurden, in einer Gesamtmenge von 0,05 bis 5 Gew.-% zugesetzt werden.
Für die Herstellung der erfindungsgemäßen reaktiven Zusammensetzungen können darüber hinaus Zusatzstoffe wie Verlaufsmittel, z. B. Polysilicone oder Haftvermittler, z. B. auf Acrylatbasis, zugesetzt werden. Zusätzlich können noch weitere Komponenten optional enthalten sein.
Als Hilfs- und Zusatzstoffe können zusätzlich Regler, Weichmacher, Stabilisatoren und/oder Inhibitoren eingesetzt werden.

Darüber hinaus können Farbstoffe, nanoskalige Füllstoffe, Toughener (Zähigkeitsverbesserer), Trennmittel, Flammschutzmittel, Pigmente, Trockenmittel, Netz-, Dispergier- und Verlaufshilfsmittel, Haftvermittler, UV-Stabilisatoren, Entschäumer und Rheologieadditive zugesetzt werden.

Gegenstand der Erfindung ist auch die Verwendung von Epoxidharz-Zusammensetzungen enthaltend:

A) mindestens eine Epoxidverbindung
und

B) eine Härterzusammensetzung enthaltend:

B1) 0,1 - 100 Gew.-% 2-(3,3,5-trimethylcyclohexyl)propan-1,3-diamin
und
B2) 99,9 - 0 Gew.-% mindestens einem weiteren Diamin und/oder Polyamin,

wobei das stöchiometrische Verhältnis der Epoxid-Gruppen von A) und der Anzahl der Wasserstoffatome der funktionellen Gruppen von B) von 1 zu 2 bis 2 zu 1 variiert, bevorzugt von 1 zu 1,5 bis 1,5 zu 1 und besonders bevorzugt von 1 zu 1,25 bis 1,25 zu 1,

C) optional 0,1 bis 10 Gew.-% mindestens eines Härtungsbeschleunigers,

D) optional mindestens einen latenten Härter,
wobei sich die Mengen von A)-D) zu 100 Gew.-% addieren,

E) gegebenenfalls weitere Zusatzstoffe.

zur Herstellung von Composites.

Das erfindungsgemäß bevorzugt verwendete faserförmige Trägermaterial der Composites ist dadurch gekennzeichnet, dass die faserförmigen Träger größtenteils aus Glas, Kohlenstoff, Kunststoffen wie Polyamid (Aramid) oder Polyester, Naturfasern, oder mineralischen Fasermaterialien wie Basaltfasern oder keramische Fasern bestehen, einzeln oder aus Mischungen, oder aus mehreren Lagen verschiedener Fasertypen.

Die faserförmigen Träger liegen als textile Flächengebilde aus Vlies, Maschenware, Gewirke oder Gestricke, nicht maschige Gebinde wie Gewebe, Gelege oder Geflechte, als Langfaser- oder Kurzfasermaterialien vor, einzeln oder aus mehreren Lagen verschiedener Typen.

Im Detail liegt folgende Ausführung vor: Der faserförmige Träger in der vorliegenden Erfindung besteht aus faserförmigem Material (auch häufig Verstärkungsfasern genannt). Im Allgemeinen ist jegliches Material, aus dem die Fasern bestehen, geeignet, bevorzugt wird jedoch faserförmiges Material aus Glas, Kohlenstoff, Kunststoffen, wie z. B. Polyamid (Aramid) oder Polyester, Naturfasern oder mineralischen Fasermaterialien wie Basaltfasern oder keramische Fasern (Oxidische Fasern auf Basis von Aluminiumoxiden und/oder Siliciumoxiden) verwendet. Auch Mischungen von Fasertypen, wie z.B. Gewebe-Kombinationen aus Aramid- und Glasfasern, oder Kohlenstoff und Glasfasern, können verwendet werden. Ebenso sind Hybrid-Composite-Bauteile mit Prepregs aus unterschiedlichen faserförmigen Trägern geeignet.

Glasfasern sind hauptsächlich wegen ihres relativ geringen Preises die am häufigsten verwendeten Fasertypen. Prinzipiell sind hier alle Arten von glasbasierenden Verstärkungsfasern geeignet (E-Glas-, S-Glas-, R-Glas-, M-Glas-, C-Glas-, ECR-Glas-, D-Glas-, AR-Glas-, oder Hohlglasfasern). Kohlenstofffasern kommen im Allgemeinen in Hochleistungsverbundstoffen zum Einsatz, wo auch die im Verhältnis zur Glasfaser niedrigere Dichte bei gleichzeitig hoher Festigkeit ein wichtiger Faktor ist. Kohlenstofffasern (auch Carbonfasern) sind industriell hergestellte Fasern aus kohlenstoffhaltigen Ausgangsmaterialien, die durch Pyrolyse in graphitartig angeordneten Kohlenstoff umgewandelt werden. Man unterscheidet isotrope und anisotrope Typen: isotrope Fasern besitzen nur geringe Festigkeiten und geringere technische Bedeutung, anisotrope Fasern zeigen hohe Festigkeiten und Steifigkeiten bei gleichzeitig geringer Bruchdehnung. Als Naturfasern werden hier alle Textilfasern und Faserwerkstoffe bezeichnet, die aus pflanzlichem und tierischem Material gewonnen werden (z.B. Holz-, Zellulose-, Baumwoll-, Hanf-, Jute-, Leinen-, Sisal-, Bambusfasern). Aramid-Fasern weisen, ähnlich wie auch Kohlenstofffasern, einen negativen Wärmeausdehnungskoeffizienten auf, werden also bei Erwärmung kürzer. Ihre spezifische Festigkeit und ihr Elastizitätsmodul sind deutlich niedriger als jene von Kohlenstofffasern. In Verbindung mit dem positiven Ausdehnungskoeffizienten des Matrixharzes lassen sich hoch maßhaltige Bauteile fertigen. Gegenüber Kohlenstofffaser verstärkten Kunststoffen ist die Druckfestigkeit von Aramidfaser- Verbundwerkstoffen deutlich geringer. Bekannte Markennamen für Aramidfasern sind Nomex® und Kevlar® von DuPont, oder Teijinconex®, Twaron® und Technora® von Teijin. Besonders geeignet und bevorzugt sind Träger aus Glasfasern, Kohlenstofffasern, Aramidfasern oder keramischen Fasern. Bei dem faserförmigen Material handelt es sich um ein textiles Flächengebilde. Geeignet sind textile Flächengebilde aus Vlies, ebenso sogenannte Maschenware, wie

Gewirke und Gestricke, aber auch nicht maschige Gebinde wie Gewebe, Gelege oder Geflechte. Außerdem unterscheidet man Langfaser- und Kurzfasermaterialien als Träger. Ebenfalls erfindungsgemäß geeignet sind Rovings und Garne. Alle genannten Materialien sind im Rahmen der Erfindung als faserförmiger Träger geeignet. Einen Überblick über Verstärkungsfasern enthält "Composites Technologien", Paolo Ermanni (Version 4), Script zur Vorlesung ETH Zürich, August 2007, Kapitel 7.

Beispiele

Beispiele: **CPDA als Härter in Epoxidharzsystemen**

Als Epoxidharz wurde das Standardharz Epikote 828 der Firma Hexion mit EpoxidÄquivalentgewicht 188 g/val verwendet. Dieses wurde wie angegeben mit der Härterkomponente 2-(3,3,5-trimethylcyclohexyl)propan-1,3-diamin (CPDA) oder Isophorondiamin (IPD) vermengt und die Glasübergangstemperatur nach Verweilzeit von einer Stunde bei definierter Härtungstemperatur bestimmt. Dazu wurden jeweils 5 g Formulierung in einem Aluminiumpfännchen mit 5 cm Durchmesser zu einem Reinharz-Gusskörper mit einer Stärke von 2 mm unter den angegebenen Bedingungen ausgehärtet. Die jeweiligen Reaktionsumsätze wurden über die aufgenommene Wärmetönung der Härtungsreaktion in Relation zur Maximalwärmetönung bestimmt:

Beschreibung der Analysemethoden:

**DSC**

**Glasübergangstemperatur:**

| | |
|---|---|
| Gerät: | Mettler DSC 1 |
| Parameter: | Temperatur -30 bis +250°C, Aufheizrate 10 K/ min |
| Bestimmung der Glasübergangstemperatur (Tg): | Halbstufenmethode, Mittelpunkt DIN 51007 |

**Bestimmung des Umsatzes:**

$$100 - \left(\frac{exothermer\ Wärmestrom\ nach\ Härtung \times 100}{exothermer\ Wärmestrom\ vor\ Härtung}\right)$$

| **Beispiel** | | **1** | **Vergleichsbeispiel** |
|---|---|---|---|
| A) Menge Epoxidharz (g) pro 100 g Härter | | 370 | 441 |
| B) Härterkomponente CPDA (g) | | 100 | |
| C) Härterkomponente IPD | | | 100 |
| Epoxidgruppen aus A) : Amino-Wasserstoffe aus B) | | 1 : 1 | 1 : 1 |
| ***DSC-Analyse nach Härtung 1h 50°C*** | | | |
| Tg | °C | 53 | 38 |
| Umsatz | % | 81 | 59 |
| ***DSC-Analyse nach Härtung 1h 70°C*** | | | |
| Tg | °C | 90 | 77 |
| Umsatz | % | 93 | 82 |

(fortgesetzt)

| | | | |
|---|---|---|---|
| ***DSC-Analyse nach Härtung 1h 90°C*** | | | |
| Tg | °C | 109 | 107 |
| Umsatz | % | 96 | 90 |
| ***DSC-Analyse nach Härtung 1h 110°C*** | | | |
| Tg | °C | 131 | 127 |
| Umsatz | % | 100 | 94 |
| ***DSC-Analyse nach Härtung 1h 130°C*** | | | |
| Tg | °C | 138 | 144 |
| Umsatz | % | 100 | 98 |
| ***DSC-Analyse nach Härtung 1h 150°C*** | | | |
| Tg | °C | 141 | 154 |
| Umsatz | % | 100 | 100 |
| ***DSC-Analyse nach Härtung 1h 180°C*** | | | |
| Tg | °C | 144 | 154 |
| Umsatz | % | 100 | 100 |

Wie der Fachmann anhand der Beispiele leicht erkennen kann, eignet sich 2-(3,3,5-trimethylcyclohexyl)propan-1,3-diamin (CPDA) als hervorragende Härterkomponente in Epoxidharzsystemen.

2-(3,3,5-trimethylcyclohexyl)propan-1,3-diamin (CPDA, s. Beispiel 1) zeigt eine deutlich höhere Reaktivität als Isophorondiamin (IPD, s. Vergleichsbeispiel), zu erkennen an der schnelleren Tg- und Umsatzentwicklung, insbesondere bei niedrigeren Härtungstemperaturen bis 70°C. 2-(3,3,5-trimethylcyclohexyl)propan-1,3-diamin (CPDA) zeigt dabei nur eine unwesentlich geringere End-Tg als Isophorondiamin (IPD).

**Patentansprüche**

**1.** Epoxidharz-Zusammensetzung enthaltend:

A) mindestens eine Epoxidverbindung
und
B) eine Härterzusammensetzung enthaltend:

B1) 0,1 - 100 Gew.-% 2-(3,3,5-trimethylcyclohexyl)propan-1,3-diamin
und
B2) 99,9 - 0 Gew.-% mindestens einem weiteren Diamin und/oder Polyamin,

wobei das stöchiometrische Verhältnis der Epoxid-Gruppen von A) und der Anzahl der aktiven Wasserstoffatome der funktionellen Gruppen von B) von 1 zu 2 bis 2 zu 1 variiert,
C) optional 0,1 bis 10 Gew.-% mindestens eines Härtungsbeschleunigers,
D) optional mindestens einen latenten Härter,
wobei sich die Mengen von A)-D) zu 100 Gew.-% addieren,
E) gegebenenfalls weitere Zusatzstoffe.

**2.** Epoxidharz-Zusammensetzung bestehend aus:

A) mindestens eine Epoxidverbindung
und
B) eine Härterzusammensetzung enthaltend:

B1) 0,1 - 100 Gew.-% 2-(3,3,5-trimethylcyclohexyl)propan-1,3-diamin
und
B2) 99,9 - 0 Gew.-% mindestens einem weiteren Diamin und/oder Polyamin,

wobei das stöchiometrische Verhältnis der Epoxid-Gruppen von A) und der Anzahl der Wasserstoffatome der funktionellen Gruppen von B) von 1 zu 2 bis 2 zu 1 variiert,
C) optional 0,1 bis 10 Gew.-% mindestens eines Härtungsbeschleunigers,
D) optional mindestens einen latenten Härter,
wobei sich die Mengen von A)-D) zu 100 Gew.-% addieren,
E) gegebenenfalls weitere Zusatzstoffe.

**3.** Epoxidharz-Zusammensetzung nach Anspruch 1 oder 2, **dadurch gekennzeichnet, dass** Epoxyverbindungen A) auswählt aus gesättigten, ungesättigten, aliphatischen, cycloaliphatischen, aromatischen, oder heterocyclisch Epoxyverbindungen, enthalten sind, und diese auch Hydroxylgruppen aufweisen können.

**4.** Epoxidharz-Zusammensetzung nach mindestens einem der vorherigen Ansprüche, **dadurch gekennzeichnet, dass** Epoxyverbindungen A) ausgewählt aus_Glycidylether, Glycidylester, aliphatischen Epoxiden, Diglycidylethern auf Basis Bisphenol A und/oder Bisphenol F, Glycidylmethacrylaten, enthalten sind.

**5.** Epoxidharz-Zusammensetzung nach mindestens einem der vorherigen Ansprüche, **dadurch gekennzeichnet, dass dadurch gekennzeichnet, dass** Epoxyverbindungen A), ausgewählt aus der Gruppe umfassend Epoxidharze auf Basis von Bisphenol A-diglycidylether, Epoxidharze auf Basis von Bisphenol F-diglycidylether, 4,4'-Methylenbis[N,N-bis(2,3-epoxypropyl)anilin], Hexandioldiglycidylether, Butandioldiglycidylether, Trimethylolpropantriglycidylether, 1,2,3-Propantrioltriglycidylether, Pentaerythrit-tetraglycidylether, Hexahydrophthalsäurediglycidylester, aliphatische oder cycloaliphatische Epoxidharz-Typen, enthalten sind.

**6.** Epoxidharz-Zusammensetzung nach mindestens einem der vorherigen Ansprüche, **dadurch gekennzeichnet, dass** als Komponente B2) die folgenden Amine allein oder in Mischungen eingesetzt werden:

• aliphatische Amine, wie die Polyalkylenpolyamine, bevorzugt ausgewählt aus 1,2-Ethylendiamin, 1,2-Propylendiamin, 1,3-Propylendiamin, 1,2-Butylendiamin, 1,3-Butylendiamin, 1,4-Butylendiamin, 2-(Ethylamino)ethylamin, 3-(Methylamino)propylamin Diethylentriamin,Triethylentetramin, Pentaethylenhexamin, Trimethylhexamethylendiamin, 2,2,4- Trimethylhexamethylendiamin, 2,4,4-Trimethylhexamethylendiamin, 2-Methyl-pentandiamin, Hexamethylendiamin, N-(2-Aminoethyl)-1,2-ethandiamin, N-(3-Aminopropyl)-1,3-propandiamin, N,N"-1,2-Ethandiylbis-(1,3-propandiamin), Dipropylentriamin Adipinsäuredihydrazid, Hydrazin;
• Oxyalkylenpolyamine, ausgewählt aus Polyoxypropylendiamin und Polyoxypropylentriamin, 1,13-Diamino-4,7,10-trioxatridecan,4,7-Dioxadecan-1,10-diamin;
• cycloaliphatische Amine, ausgewählt aus Isophorondiamin (3,5,5-Trimethyl-3-aminomethyl-cyclohexylamin), 4,4'-Diaminodicyclohexylmethan, 2,4'-Diaminodicyclohexylmethan und 2,2'-Diaminodicyclohexylmethan allein oder in Mischungen der Isomeren, 3,3'-Dimethyl-4,4'-diamino-dicyclohexylmethan, N-Cyclohexyl-1,3-propandiamin, 1,2-Diaminocyclohexan, 3-(Cyclohexylamino)propylamin, Piperazin, N-Aminoethylpiperazin, TCD-Diamin (3(4), 8(9)-Bis(aminomethyl)-tricyclo[5.2.1.$0^{2,6}$]decan), 4-Methylcyclohexan-1,3-diamin
• araliphatische Amine, wie Xylylendiamine;
• aromatische Amine, ausgewählt aus Phenylendiamine, 1,3-Phenylendiamin,. 1,4-Phenylendiamin,4,4'-Diaminodiphenylmethan, 2,4'-Diaminodiphenylmethan 2,2'-Diaminodiphenylmethan allein oder in Mischungen der Isomeren;
• Addukthärter, welches die Umsetzungsprodukte von Epoxidverbindungen, insbesondere Glycidylether des Bisphenol A und F, mit überschüssigem Amin sind;
• Polyamidoaminhärter, die durch Kondensation von Mono- und Polycarbonsäuren mit Polyaminen erhalten werden, insbesondere durch Kondensation von Dimerfettsäuren mit Polyalkylenpolyaminen;
• Mannichbasenhärter, die durch Umsetzung von ein- oder mehrwertigen Phenolen mit Aldehyden, insbesondere Formaldehyd, und Polyaminen erhalten werden;
• Mannichbasen z. B. auf Basis von Phenol und/oder Resorcin, Formaldehyd und m-Xylylendiamin sowie N-Aminoethylpiperazin und Abmischungen von N-Aminoethylpiperazin mit Nonylphenol und/oder Benzylalkohol, Phenalkamine, die in einer Mannichreaktion aus Cardanolen, Aldehyden und Aminen gewonnen werden.

**7.** Epoxidharz-Zusammensetzung nach mindestens einem der vorherigen Ansprüche, **dadurch gekennzeichnet, dass** Di- und/oder Polyamine B2) ausgewählt aus Isophorondiamin, 4,4'-Diaminodicyclohexylmethan, 2,4'-Diaminodicyclohexylmethan 2,2'-Diaminodicyclohexylmethan, allein oder in Mischungen der Isomeren, eine Mischung der Isomeren aus 2,2,4-Trimethylhexamethylendiamin und 2,4,4-Trimethylhexamethylendiamin, Addukthärter auf Basis der Umsetzungsprodukte von Epoxidverbindungen und Di- und/oder Polyamine B2) oder Kombination der vorgenannten Di- und/oder Polyamine B2), enthalten sind.

**8.** Epoxidharz-Zusammensetzung nach mindestens einem der vorherigen Ansprüche, **dadurch gekennzeichnet, dass** Di- und/oder Polyamine B2) ausgewählt aus

a) Isophorondiamin (3,5,5-Trimethyl-3-aminomethyl-cyclohexylamin, IPD),
b) oder eine Kombination aus

1. Isophorondiamin und
2. einer Mischung der Isomeren aus 2,2,4-Trimethylhexamethylendiamin und 2,4,4-Trimethylhexamethylendiamin (TMD), allein oder in Mischungen der Isomeren
3. und/oder einer Mischung der Isomeren aus 4,4'-Diaminodicyclohexylmethan, 2,4'-Diaminodicyclohexylmethan und 2,2'-Diaminodicyclohexylmethan (auch als PACM bezeichnet), allein oder in Mischungen der Isomeren,

c) oder eine Kombination aus

1. einer Mischung der Isomeren aus 2,2,4-Trimethylhexamethylendiamin und 2,4,4-Trimethylhexamethylendiamin (TMD), allein oder in Mischungen der Isomeren
2. und/oder einer Mischung der Isomeren aus 4,4'-Diaminodicyclohexylmethan, 2,4'-Diaminodicyclohexylmethan und 2,2'-Diaminodicyclohexylmethan (auch als PACM bezeichnet), allein oder in Mischungen der Isomeren,

d) und/oder Addukthärter auf Basis der Umsetzungsprodukte von Epoxidverbindungen und den vorgenannten Aminen B2) oder Kombination von vorgenannten Aminen B2)

eingesetzt werden.

**9.** Epoxidharz-Zusammensetzung nach mindestens einem der vorherigen Ansprüche, **dadurch gekennzeichnet, dass** als Härtungsbeschleuniger C) Imidazol und/oder Imidazol-Derivate enthalten sind.

**10.** Epoxidharz-Zusammensetzung nach mindestens einem der vorherigen Ansprüche, **dadurch gekennzeichnet, dass** latente Härter D), ausgewählt aus Dicyandiamid, Cyanoguanidine, aromatische Amine, Guanidinen, modifizierten Polyaminen, N-Acylimidazolen, Imidazolen, Carbonsäurehydrazide, Triazinderivate, Melamin und dessen Derivate, N-Cyanacylamid-Verbindungen, Acylthiopropylphenole, enthalten sind.

**11.** Verwendung von Epoxidharz-Zusammensetzungen nach mindestens einem der vorherigen Ansprüche, enthaltend:

A) mindestens eine Epoxidverbindung und
B) eine Härterzusammensetzung enthaltend:

B1) 0,1 - 100 Gew.-% 2-(3,3,5-trimethylcyclohexyl)propan-1,3-diamin
und
B2) 99,9 - 0 Gew.-% mindestens einem weiteren Diamin und/oder Polyamin,

wobei das stöchiometrische Verhältnis der Epoxid-Gruppen von A) und der Anzahl der Wasserstoffatome der funktionellen Gruppen von B) von 1 zu 2 bis 2 zu 1 variiert, bevorzugt von 1 zu 1,5 bis 1,5 zu 1 und besonders bevorzugt von 1 zu 1,25 bis 1,25 zu 1,
C) optional 0,1 bis 10 Gew.-% mindestens eines Härtungsbeschleunigers,
D) optional mindestens einen latenten Härter,
wobei sich die Mengen von A)-D) zu 100 Gew.-% addieren,
E) gegebenenfalls weitere Zusatzstoffe.

zur Herstellung von Composites.

**Claims**

1. Epoxy resin composition comprising:

A) at least one epoxy compound
and
B) a hardener composition comprising:

B1) 0.1%-100% by weight of 2-(3,3,5-trimethylcyclohexyl)propane-1,3-diamine
and
B2) 99.9%-0% by weight of at least one further diamine and/or polyamine,

where the stoichiometric ratio of the epoxy groups of A) and the number of active hydrogen atoms of the functional groups of B) varies from 1:2 to 2:1,
C) optionally 0.1% to 10% by weight of at least one hardening accelerator,
D) optionally at least one latent hardener,
where the amounts of A)-D) add up to 100% by weight,
E) optionally further additives.

2. Epoxy resin composition consisting of:

A) at least one epoxy compound
and
B) a hardener composition comprising:

B1) 0.1%-100% by weight of 2-(3,3,5-trimethylcyclohexyl)propane-1,3-diamine
and
B2) 99.9%-0% by weight of at least one further diamine and/or polyamine,

where the stoichiometric ratio of the epoxy groups of A) and the number of hydrogen atoms of the functional groups of B) varies from 1:2 to 2:1,
C) optionally 0.1% to 10% by weight of at least one hardening accelerator,
D) optionally at least one latent hardener,
where the amounts of A)-D) add up to 100% by weight,
E) optionally further additives.

3. Epoxy resin composition according to Claim 1 or 2, **characterized in that** epoxy compounds A) selected from saturated, unsaturated, aliphatic, cycloaliphatic, aromatic and heterocyclic epoxy compounds are present, and these may also have hydroxyl groups.

4. Epoxy resin composition according to at least one of the preceding claims, **characterized in that** epoxy compounds A) selected from glycidyl ethers, glycidyl esters, aliphatic epoxides, diglycidyl ethers based on bisphenol A and/or bisphenol F, glycidyl methacrylates are present.

5. Epoxy resin composition according to at least one of the preceding claims, **characterized in that characterized in that** epoxy compounds A) selected from the group comprising epoxy resins based on bisphenol A diglycidyl ether, epoxy resins based on bisphenol F diglycidyl ether, 4,4'-methylenebis[N,N-bis(2,3-epoxypropyl)aniline], hexanediol diglycidyl ether, butanediol diglycidyl ether, trimethylolpropane triglycidyl ether, propane-1,2,3-triol triglycidyl ether, pentaerythritol tetraglycidyl ether, diglycidyl hexahydrophthalate, aliphatic or cycloaliphatic epoxy resin types are present.

6. Epoxy resin composition according to at least one of the preceding claims, **characterized in that** component B2) used comprises the following amines, alone or in mixtures:

• aliphatic amines, such as the polyalkylenepolyamines, preferably selected from ethylene-1,2-diamine, propylene-1,2-diamine, propylene-1,3-diamine, butylene-1,2-diamine, butylene-1,3-diamine, butylene-1,4-diamine, 2-(ethylamino)ethylamine, 3-(methylamino)propylamine, diethylenetriamine, triethylenetetramine, pentaethylenehexamine, trimethylhexamethylenediamine, 2,2,4-trimethylhexamethylenediamine, 2,4,4-trimethylhexamethylenediamine, 2-methylpentanediamine, hexamethylenediamine, N-(2-aminoethyl)ethane-1,2-diamine, N-(3-aminopropyl)propane-1,3-diamine, N,N''-1,2-ethanediylbis(1,3-propanediamine), dipropylenetriamine, adipic dihydrazide, hydrazine;

• oxyalkylenepolyamines selected from polyoxypropylenediamine and polyoxypropylenetriamine, 1,13-diamino-4,7,10-trioxatridecane, 4,7-dioxadecane-l,10-diamine;

• cycloaliphatic amines selected from isophoronediamine (3,5,5-trimethyl-3-aminomethylcyclohexylamine), 4,4'-diaminodicyclohexylmethane, 2,4'-diaminodicyclohexylmethane and 2,2'-diaminodicyclohexylmethane, alone or in mixtures of the isomers, 3,3'-dimethyl-4,4'-diaminodicyclohexylmethane, N-cyclohexyl-1,3-propanediamine, 1,2-diaminocyclohexane, 3-(cyclohexylamino)propylamine, piperazine, N-aminoethylpiperazine, TCD diamine (3(4),8(9)-bis (aminomethyl) tricyclo [5.2.1.0$^{2,6}$] decane), 4-methylcyclohexane-1,3-diamine

• araliphatic amines such as xylylenediamines;

• aromatic amines selected from phenylenediamines, phenylene-1,3-diamine, phenylene-1,4-diamine, 4,4'-diaminodiphenylmethane, 2,4'-diaminodiphenylmethane, 2,2'-diaminodiphenylmethane, alone or in mixtures of the isomers;

• adduct hardeners which are the reaction products of epoxy compounds, especially glycidyl ethers of bisphenol A and F, with excess amine;

• polyamidoamine hardeners which are obtained by condensation of mono- and polycarboxylic acids with polyamines, especially by condensation of dimer fatty acids with polyalkylenepolyamines;

• Mannich base hardeners which are obtained by reaction of mono- or polyhydric phenols with aldehydes, especially formaldehyde, and polyamines;

• Mannich bases, for example based on phenol and/or resorcinol, formaldehyde and m-xylylenediamine, and also N-aminoethylpiperazine and blends of N-aminoethylpiperazine with nonylphenol and/or benzyl alcohol, phenalkamines which are obtained in a Mannich reaction from cardanols, aldehydes and amines.

**7.** Epoxy resin composition according to at least one of the preceding claims, **characterized in that** di- and/or polyamines B2) selected from isophoronediamine, 4,4'-diaminodicyclohexylmethane, 2,4'-diaminodicyclohexylmethane, 2,2'-diaminodicyclohexylmethane, alone or in mixtures of the isomers, a mixture of the isomers of 2,2,4-trimethylhexamethylenediamine and 2,4,4-trimethylhexamethylenediamine, adduct hardeners based on the reaction products of epoxy compounds and di- and/or polyamines B2) or combination of the aforementioned di- and/or polyamines B2) are present.

**8.** Epoxy resin composition according to at least one of the preceding claims, **characterized in that** di- and/or polyamines B2) selected from

a) isophoronediamine (3,5,5-trimethyl-3-aminomethylcyclohexylamine, IPD),
b) or a combination of

1. isophoronediamine and
2. a mixture of the isomers of 2,2,4-trimethylhexamethylenediamine and 2,4,4-trimethylhexamethylenediamine (TMD), alone or in mixtures of the isomers,
3. and/or a mixture of the isomers of 4,4'-diaminodicyclohexylmethane, 2,4'-diaminodicyclohexylmethane and 2,2'-diaminodicyclohexylmethane (also referred to as PACM), alone or in mixtures of the isomers,

c) or a combination of

1. a mixture of the isomers of 2,2,4-trimethylhexamethylenediamine and 2,4,4-trimethylhexamethylenediamine (TMD), alone or in mixtures of the isomers,
2. and/or a mixture of the isomers of 4,4'-diaminodicyclohexylmethane, 2,4'-diaminodicyclohexylmethane and 2,2'-diaminodicyclohexylmethane (also referred to as PACM), alone or in mixtures of the isomers,

d) and/or adduct hardeners based on the reaction products of epoxy compounds and the aforementioned amines B2) or combination of the aforementioned amines B2)

are used.

**9.** Epoxy resin composition according to at least one of the preceding claims, **characterized in that** hardening accelerators C) present are imidazole and/or imidazole derivatives.

10. Epoxy resin composition according to at least one of the preceding claims, **characterized in that** latent hardeners D) selected from dicyandiamide, cyanoguanidines, aromatic amines, guanidines, modified polyamines, N-acylimidazoles, imidazoles, carbonyl hydrazides, triazine derivatives, melamine and derivatives thereof, N-cyanoacylamide compounds, acylthiopropylphenols are present.

11. Use of epoxy resin compositions according to at least one of the preceding claims, comprising:

A) at least one epoxy compound
and
B) a hardener composition comprising:

B1) 0.1%-100% by weight of 2-(3,3,5-trimethylcyclohexyl)propane-1,3-diamine
and
B2) 99.9%-0% by weight of at least one further diamine and/or polyamine,

where the stoichiometric ratio of the epoxy groups of A) and the number of hydrogen atoms of the functional groups of B) varies from 1:2 to 2:1, preferably from 1:1.5 to 1.5:1 and more preferably from 1:1.25 to 1.25:1,
C) optionally 0.1% to 10% by weight of at least one hardening accelerator,
D) optionally at least one latent hardener,
where the amounts of A)-D) add up to 100% by weight,
E) optionally further additives,

for production of composites.

**Revendications**

1. Composition de résine époxyde, contenant :

A) au moins un composé d'époxyde
et
B) une composition de durcisseur, contenant :

B1) 0,1 à 100 % en poids de 2-(3,3,5-triméthylcyclohexyl)propane-1,3-diamine
et
B2) 99,9 à 0 % en poids d'au moins une autre diamine et/ou polyamine,

le rapport stoechiométrique entre les groupes époxyde de A) et le nombre d'atomes d'hydrogène actifs des groupes fonctionnels de B) variant de 1 sur 2 à 2 sur 1,
C) éventuellement 0,1 à 10 % en poids d'au moins un accélérateur de durcissement,
D) éventuellement au moins un durcisseur latent,
la somme des quantités de A) à D) étant de 100 % en poids,
E) éventuellement d'autres additifs.

2. Composition de résine époxyde, constituée par :

A) au moins un composé d'époxyde
et
B) une composition de durcisseur, contenant :

B1) 0,1 à 100 % en poids de 2-(3,3,5-triméthylcyclohexyl)propane-1,3-diamine
et
B2) 99,9 à 0 % en poids d'au moins une autre diamine et/ou polyamine,

le rapport stoechiométrique entre les groupes époxyde de A) et le nombre d'atomes d'hydrogène actifs des groupes fonctionnels de B) variant de 1 sur 2 à 2 sur 1,
C) éventuellement 0,1 à 10 % en poids d'au moins un accélérateur de durcissement,
D) éventuellement au moins un durcisseur latent,

la somme des quantités de A) à D) étant de 100 % en poids,
E) éventuellement d'autres additifs.

3. Composition de résine époxyde selon la revendication 1 ou 2, **caractérisée en ce que** des composés époxy A) choisis parmi les composés époxy saturés, insaturés, aliphatiques, cycloaliphatiques, aromatiques ou hétérocycliques sont contenus, et ceux-ci peuvent également comprendre des groupes hydroxyle.

4. Composition de résine époxyde selon au moins l'une quelconque des revendications précédentes, **caractérisée en ce que** des composés époxy A) choisis parmi les éthers glycidyliques, les esters glycidyliques, les époxydes aliphatiques, les éthers diglycidyliques à base de bisphénol A et/ou de bisphénol F, les méthacrylates de glycidyle sont contenus.

5. Composition de résine époxyde selon au moins l'une quelconque des revendications précédentes, **caractérisée en ce que caractérisée en ce que** des composés époxy A) choisis dans le groupe comprenant les résines époxydes à base d'éther diglycidylique de bisphénol A, les résines époxydes à base d'éther diglycidylique de bisphénol F, la 4,4'-méthylène-bis[N,N-bis(2,3-époxypropyl)aniline], l'éther diglycidylique d'hexanediol, l'éther diglycidylique de butanediol, l'éther triglycidylique de triméthylolpropane, l'éther triglycidylique de 1,2,3-propanetriol, l'éther tétraglycidylique de pentaérythrite, l'ester diglycidylique de l'acide hexahydrophtalique, les types de résines époxydes aliphatiques ou cycloaliphatiques sont contenus.

6. Composition de résine époxyde selon au moins l'une quelconque des revendications précédentes, **caractérisée en ce que** les amines suivantes sont utilisées seules ou en mélanges en tant que composant B2) :

- les amines aliphatiques, telles que les polyalkylène-polyamines, de préférence choisies parmi la 1,2-éthylène-diamine, la 1,2-propylène-diamine, la 1,3-propylène-diamine, la 1,2-butylène-diamine, la 1,3-butylène-diamine, la 1,4-butylène-diamine, la 2-(éthylamino)éthylamine, la 3-(méthylamino)propylamine, la diéthylène-triamine, la triéthylène-tétramine, la pentaéthylène-hexamine, la triméthylhexaméthylène-diamine, la 2,2,4-triméthylhexaméthylène-diamine, la 2,4,4-triméthylhexaméthylène-diamine, la 2-méthyl-pentane-diamine, l'hexaméthylène-diamine, la N-(2-aminoéthyl)-1,2-éthane-diamine, la N-(3-aminopropyl)-1,3-propane-diamine, la N,N"-1,2-éthane-diylbis-(1,3-propane-diamine), la dipropylène-triamine, le dihydrazine de l'acide adipique, l'hydrazine ;
- les oxyalkylène-polyamines, choisies parmi la polyoxypropylène-diamine et la polyoxypropylène-triamine, le 1,13-diamino-4,7,10-trioxatridécane, la 4,7-dioxadécane-1,10-diamine ;
- les amines cycloaliphatiques, choisies parmi l'isophorone-diamine (3,5,5-triméthyl-3-aminométhyl-cyclohexylamine), le 4,4'-diaminodicyclohexylméthane, le 2,4'-diaminodicyclohexylméthane et le 2,2'-diaminodicyclohexylméthane seuls ou en mélanges des isomères, le 3,3'-diméthyl-4,4'-diaminodicyclohexylméthane, la N-cyclohexyl-1,3-propane-diamine, le 1,2-diaminocyclohexane, la 3-(cyclohexylamino)propylamine, la pipérazine, la N-aminoéthylpipérazine, la TCD-diamine (3(4),8(9)-bis(aminométhyl)-tricyclo [5.2.1.$0^{2,6}$] décane), la 4-méthylcyclohexane-1,3-diamine,
- les amines araliphatiques, telles que les xylylène-diamines ;
- les amines aromatiques, choisies parmi les phénylène-diamines, la 1,3-phénylène-diamine, la 1,4-phénylène-diamine, le 4,4'-diaminodiphénylméthane, le 2,4'-diaminodiphénylméthane, le 2,2'-diaminodiphénylméthane seuls ou en mélanges des isomères ;
- les durcisseurs adduits, qui sont les produits de réaction de composés d'époxyde, notamment d'éther glycidylique de bisphénol A et F, avec une amine en excès ;
- les durcisseurs polyamidoamine, qui sont obtenus par condensation d'acides mono- et polycarboxyliques avec des polyamines, notamment par condensation d'acides gras dimères avec des polyalkylène-polyamines ;
- les durcisseurs bases de Mannich, qui sont obtenus par réaction de phénols mono- et polyvalents avec des aldéhydes, notamment du formaldéhyde, et des polyamines ;
- les bases de Mannich, p. ex. à base de phénol et/ou de résorcine, de formaldéhyde et de m-xylylène-diamine, ainsi que de N-aminoéthylpipérazine et de mélanges de N-aminoéthylpipérazine avec du nonylphénol et/ou de l'alcool benzylique, des phénalcamines, qui sont obtenues par une réaction de Mannich de cardanols, d'aldéhydes et d'amines.

7. Composition de résine époxyde selon au moins l'une quelconque des revendications précédentes, **caractérisée en ce que** des di- et/ou polyamines B2) choisies parmi l'isophorone-diamine, le 4,4'-diaminodicyclohexylméthane, le 2,4'-diaminodicyclohexylméthane, le 2,2'-diaminodicyclohexylméthane, seuls ou en mélanges des isomères, un mélange des isomères de 2,2,4-triméthylhexaméthylène-diamine et de 2,4,4-triméthylhexaméthylène-diamine, les durcisseurs adduits à base des produits de réaction de composés d'époxyde et de di- et/ou polyamines B2) ou

d'une combinaison des di- et/ou polyamines B2) susmentionnées, sont contenues.

**8.** Composition de résine époxyde selon au moins l'une quelconque des revendications précédentes, **caractérisée en ce que** des di- et/ou polyamines B2) choisies parmi :

a) l'isophorone-diamine (3,5,5-triméthyl-3-aminométhyl-cyclohexylamine, IPD),
b) ou une combinaison de

1. l'isophorone-diamine et
2. un mélange des isomères de 2,2,4-triméthylhexaméthylène-diamine et de 2,4,4-triméthylhexaméthylène-diamine (TMD), seuls ou en mélanges des isomères,
3. et/ou un mélange des isomères de 4,4'-diaminodicyclohexylméthane, de 2,4'-diaminodicyclohexylméthane et de 2,2'-diaminodicyclohexylméthane (également nommé PACM), seuls ou en mélanges des isomères,

c) ou une combinaison de :

1. un mélange des isomères de 2,2,4-triméthylhexaméthylène-diamine et de 2,4,4-triméthylhexaméthylène-diamine (TMD), seuls ou en mélanges des isomères,
2. et/ou un mélange des isomères de 4,4'-diaminodicyclohexylméthane, de 2,4'-diaminodicyclohexylméthane et de 2,2'-diaminodicyclohexylméthane (également nommé PACM), seuls ou en mélanges des isomères,

d) et/ou des durcisseurs adduits à base des produits de réaction de composés d'époxyde et des amines B2) susmentionnées ou d'une combinaison des amines B2) susmentionnées,

sont utilisées.

**9.** Composition de résine époxyde selon au moins l'une quelconque des revendications précédentes, **caractérisée en ce que** de l'imidazole et/ou des dérivés d'imidazole sont contenus en tant qu'accélérateurs de durcissement C) .

**10.** Composition de résine époxyde selon au moins l'une quelconque des revendications précédentes, **caractérisée en ce que** des durcisseurs latents D), choisis parmi le dicyandiamide, les cyanoguanidines, les amines aromatiques, les guanidines, les polyamines modifiées, les N-acylimidazoles, les imidazoles, les hydrazides d'acides carboxyliques, les dérivés de triazine, la mélamine et ses dérivés, les composés de N-cyanacylamide, les acylthiopropylphénols, sont contenus.

**11.** Utilisation de compositions de résine époxyde selon au moins l'une quelconque des revendications précédentes, contenant :

A) au moins un composé d'époxyde
et
B) une composition de durcisseur, contenant :

B1) 0,1 à 100 % en poids de 2-(3,3,5-triméthylcyclohexyl)propane-1,3-diamine
et
B2) 99,9 à 0 % en poids d'au moins une autre diamine et/ou polyamine,

le rapport stoechiométrique entre les groupes époxyde de A) et le nombre d'atomes d'hydrogène actifs des groupes fonctionnels de B) variant de 1 sur 2 à 2 sur 1, de préférence de 1 sur 1,5 à 1,5 sur 1 et de manière particulièrement préférée de 1 sur 1,25 à 1,25 sur 1,
C) éventuellement 0,1 à 10 % en poids d'au moins un accélérateur de durcissement,
D) éventuellement au moins un durcisseur latent,
la somme des quantités de A) à D) étant de 100 % en poids,
E) éventuellement d'autres additifs,

pour la fabrication de composites.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102012223387 A1
- EP 675185 A
- US 4859761 A
- EP 306451 A
- US 4436892 A
- US 4587311 A
- JP PS743212 A
- US 3678007 A
- US 3677978 A
- US 3030247 A
- US 4283520 A
- US 4529821 A
- US 4550203 A
- US 4618712 A
- US 4694096 A
- US 3386955 A
- WO 9955772 A
- EP 669353 A


### In der Beschreibung aufgeführte Nicht-Patentliteratur


- Epoxidverbindungen und Epoxidharze. **A. M. PAQUIN.** Handbuch. Springer Verlag, 1958
- **LEE NEVILLE.** Handbook of Epoxy Resins. 1967
- **H. LEE ; K. NEVILLE.** Handbook of Epoxy Resins. McGraw-Hill, 1967
- **R. GÄCHTER ; H. MÜLLER.** Plastics Additives. Hanser Publishers, 1983
- Composites Technologien. **PAOLO ERMANNI.** Script zur Vorlesung ETH Zürich. August 2007